# EUROPÄISCHE PATENTSCHRIFT

(11) **EP 0 507 985 B1**
(45) Veröffentlichungstag und Bekanntmachung des Hinweises auf die Patenterteilung: **17.11.1994**
(21) Anmeldenummer: 91114017.6
(22) Anmeldetag: 21.08.1991
(51) Int. Cl.: C03C 3/087, C03C 4/08

(54) **Vanadinhaltiges Kalknatronglas**
Vanadium containing soda-lime-glass
Verre soude-calcaire contenant du vanadium

(30) Priorität: 10.04.1991 DE 4111702
(43) Veröffentlichungstag der Anmeldung: 14.10.1992
(73) Patentinhaber: FLACHGLAS AKTIENGESELLSCHAFT, 90762 Fürth (DE)
(72) Erfinder: Winter, Ernst, Dr. rer. nat., W-8481 Etzenricht (DE); Marwan, Friedrich, Dr. rer. nat., W-8480 Weiden (DE); Bretschneider, Joachim, Dr. Ing., W-8480 Weiden (DE); Drexler, Hubert, Dr. rer. nat., W-8400 Regensburg (DE)
(74) Vertreter: Neidl-Stippler, Cornelia, Dr.

(56) Entgegenhaltungen:
- GB-A- 708 031
- US-A- 2 676 109
- CHEMICAL ABSTRACTS, vol. 101, no. 6, August 1984, Columbus, Ohio, US; abstract no. 42477V, Seite 251 ; & JP-A-59 050 045 (ASAHI GLASS CO.) 22. März 1984.
- CHEMICAL ABSTRACTS, vol. 113, no. 20, 12. November 1990, Columbus, Ohio, US; abstract no. 176954E, Seite 293 ; & JP-A-2 048 427 (ISHIZUKA GLASS CO)19.Februar 1990.

## Beschreibung

Die Erfindung betrifft ein vanadinhaltiges Kalknatronglas, insbesondere ein nach dem Floatverfahren hergestelltes Flachglas mit erhöhter UV-Absorption für Wellenlängen unter 350 nm.

Gläser mit erhöhter UV-Absorption, wobei hier unter erhöhter UV-Absorption eine UV-Absorption bis etwa 90 % der UV-Strahlung bei Wellenlängen von unter 400 nm verstanden wird, wurden bisher als Flachgläser nur vereinzelt verwendet, bevorzugt jedoch in der Hohlglasindustrie zur Herstellung von Glasbehältern, wie Flaschen, in denen UV-empfindliche Lebensmittel, z.B. Milch, Joghurt, vitaminhaltige Säfte oder dergleichen, transportiert und gelagert werden sollen.

Seit einiger Zeit besteht ein verstärktes Interesse an im UV-Bereich stark absorbierenden Flachgläsern mit hoher Transmission im sichtbaren Bereich, die im wesentlichen farbneutral sind. Unter hoher Transmission wird hier der Mindestwert der Transmission gemäß DIN 1249, Teil 10, Tabelle 5 für Flachglas im Bauwesen, verstanden. Dieses Interesse trifft sowohl auf Gläser für den Bau- als auch den Kraftfahrzeugsektor zu, beispielsweise um Schaufensterauslagen vor dem Ausbleichen zu schützen oder auch um Kraftfahrzeuginnenraummaterialien aus Kunststoff vor Zersetzung, verfrühter Alterung und insbesondere auch Farbänderungen zu schützen. Ein besonderer Anwendungsfall für die Verwendung von UV-absorbierenden Flachgläsern besteht bei der Herstellung von Verbundglasscheiben, insbesondere solchen mit Gießharz- bzw. Brandschutzzwischenschichten. Diese Zwischenschichten oder auch dafür verwendete Klebstoffe müssen z.Zt. noch mit teuren UV-beständigen Bestandteilen versehen werden, oder, falls sie es nicht sind, ist es insbesondere auch bei Brandschutzzwischenschichten auf Wasserglasbasis üblich, UV-absorbierende Schichten im Glasverbund vorzusehen oder diese feuerhemmenden Verbundglasscheiben nur im Gebäudeinneren einzusetzen, wo keine UV-Strahlen auftreten. Besonders UV-empfindlich ist beispielsweise das Glycerin, das u. a. in Brandschutzwasserglasschichten eingesetzt wird.

UV-absorbierende Kalknatrongläser/sind beispielsweise in der JP-OS 52-47 811 beschrieben worden, in denen 0,035 bis 0,12 Gew.% V₂O₅ gemeinsam mit 0,006 bis 0,08 Gew.% Manganoxid und weniger als 0,4 ppm Co₂O₃ verarbeitet wurden. Dieses Kalknatronglas weist zwar UV-Absorptionsfähigkeit auf, benötigte aber zum Farbausgleich - abgesehen vom Eisen - den Einsatz von drei farbverändernden Substanzen. Ferner handelt es sich dabei um eine Glasmischung, die MnO₂ enthält. Braunstein (MnO₂) kann unter den Verfahrensbedingungen der Floatglasherstellung nicht ohne Probleme eingesetzt werden, da zur Stabilisierung von Mn³⁺ in der Glasschmelze stark oxidierende Schmelzbedingungen erforderlich sind, die in der Schmelzwanne einer Floatanlage nur sehr schwer zur realisieren sind. Eine zumindest teilweise Reduktion des Mangans zu praktisch farblosem Mn²⁺ läßt sich beim Floatprozeß somit kaum vermeiden.

Ferner ist bekannt, daß Mn²⁺-haltige Gläser im Laufe der Zeit "Solarisieren", d.h. durch UV-Licht werden Redoxreaktionen ausgelöst, bei denen z. B. durch im Glas anwesende Fe³⁺-Ionen - oder auch durch andere oxidierende Bestandteile - das farblose Mn²⁺ zu violett färbendem Mn³⁺ oxidiert wird. Das bedeutet, daß sich unter der Wirkung von UV-Licht der Farbton Mn²⁺-haltiger Gläser allmählich ändert.

Alternativ zu MnO₂ wurde auch Selenoxid eingesetzt, das aber wegen seiner Umweltschädlichkeit und Toxizität zu vermeiden ist. Selen hat-noch dazu eine Tendenz, zu sublimieren, sodaß es notwendig ist, umfangreiche Emissionsschutzmaßnahmen zu treffen.

In der JP-OS 59-50 045 wurde ein Kalknatronglas mit erhöhter UV- und IR-Absorption vorgeschlagen, das 0,05 bis 1,0 Gew.% V₂O₅, 0,2 bis 0,5 Fe₂O₃ und 0 bis 5 Gew.% TiO₂ in einer Glaszusammensetzung als färbende Komponenten verwendete, wobei dieses Glas mindestens 50 % Transmission für Strahlung im sichtbaren Bereich und bis 75 % Durchlässigkeit für Sonnenstrahlung aufweist. Dieses Glas absorbiert Strahlen unterhalb von 370 nm praktisch vollständig, wodurch das Ausbleichen und die Photo-reaktionen von durch dieses Glas geschützten Artikeln vermieden werden kann. Ein Nachteil dieses Glases besteht darin, daß die Durchlässigkeit für strahlen im sichtbaren Bereich nur ausreichend ist. Zur Herstellung eines UV-absorbierenden Floatglases mit hoher Transmission im sichtbaren Bereicht, das im wesentlichen farbneutral ist, ist die dort angegebene Lehre jedoch nicht ausreichend.

Aus der GB-PS 708 031 ist ein Kalknatronglas (Kronglas) mit einem Refraktionsindex von etwa 1,523 bekannt, das als optisches Glas oder als Glas mit besonderen Brechungseigenschaften eingesetzt werden kann und speziell für die Herstellung von Brillengläsern und dergleichen ausgelegt wurde. Bei diesem Anwendungsfall ist die UV-Absorption zum Schutz des Auges erwünscht. Dieses Glas zeigt keine UV-Transmission unterhalb von 356 nm und im sichtbaren Bereich eine Transmission von mindestens 75 %. Zur Erzielung dieser Eigenschaften wurden 0,2 bis 1,2 Gew.% Vanadinoxid gemeinsam mit mindestens einem weiteren farbmodifizierenden Metalloxid, ausgewählt aus der Gruppe von Eisen, Kobalt, Kupfer, Chrom, Zinn, Arsen, Antimon, Mangan sowie weiteren Bestandteilen, eingesetzt.

Dieses Glas zeigt zwar gute UV-Absorptionseigenschaften bei gleichzeitig zufriedenstellender Transmission im sichtbaren Bereich; das Glas eignet sich allerdings nicht zur Herstellung von Flachgläsern, insbesondere nach dem Floatglas-Verfahren, da es nicht die für das Floatglas-Verfahren notwendigen Viskositäts- und Floateigenschaften aufweist. Das zur Farbangleichung vorgeschlagene Manganoxid ist beim Floatglasverfahren aus den oben genannten Gründen nicht einsetzbar.

Darüber hinaus sind UV-absorbierende Borosilikatgläser aus der EP-PS O 321 297 bekannt, die eine Kombination von farbverändernden Additiven, ausgewählt aus der Gruppe bestehend aus Ceroxid, Manganoxid, Eisenoxid, Kobaltoxid, Kupferoxid, Vanadinoxid, Molybdänoxid aufweisen. Das dort insbesondere für die Herstellung von Windschutzscheiben von Kraftfahrzeugen vorgeschlagene Glas ist kostenaufwendig herzustellen, da die einzusetzenden Bormaterialien teuer sind. Diese neigen zur Verflüchtigung und bilden umweltschädliche Emissionen, die aufgrund des mit der Beseitigung dieser Emissionen verbundenen hohen Kostenaufwandes erfindungsgemäß vermieden werden sollen. Das Dokument gibt keinerlei genaue Anregung dahingehend, wie Vanadinoxid mit weiteren Metalloxiden zur Vermeidung der UV-Durchlässigkeit kombiniert werden kann, es wird empfohlen, die teueren Oxide der seltenen Erden, beispielsweise Cer oder auch Lanthan zur Verbesserung des Absorptionsverhaltens einzusetzen, so daß die Verwendung der Vanadinoxide lediglich als fakultative Zusatzmöglichkeit, aber ohne Information dahingehend, in welcher Menge es gemeinsam mit anderen Farbstoffen eingesetzt wird, angegeben wird. Floatglaszusammensetzungen lassen sich danach nicht herstellen.

Aus der DE-PS 20 06 078 sind Tafelgläser bekannt geworden, die zur Verringerung der Transmission im sichtbaren kund infraroten Spektralbereich eine Mischung von Kupferoxid, Vanadinpentoxid, Eisen-III-oxid, Nickeloxid und Kobaltoxid aufweisen, wobei die Summe dieser färbenden Komponenten, deren Verhältnis zueinander variiert werden kann, mindestens 2,9 Gew.% der Glasmischung beträgt. Das danach herstellbare hochplane Spezialglas ist für die Herstellung von Floatglas zu kostenaufwendig und wird hier für den Spezialfall der Herstellung von magnetischen/optischen Speicherplatten entwickelt. Auf das Vorliegen eines möglichst farbneutralen Eindrucks wird naturgemäß wenig Wert gelegt.

Eine UV-absorbierende Schaufensterscheibe ist aus der DE-PS 916 217 bekannt, wobei zur Absorption der kurzwelligen Strahlung unter etwa 400 nm vorgeschlagen wird, etwa 2 Gew.% Cer- oder Titanoxid zur üblichen Schaufensterglaszusammensetzung beizufügen.

Aus der DE-PS 14 96 072 ist ein Filterglas mit einem sehr hohen Kieselsäuregehalt von 96 Gew.% bekannt, bei dem mittels V₂O₅ als Additiv gemeinsam mit Cernitrat und Titandioxid eine starke UV-Absorption erreicht wird. Die hoch silikathaltigen Gläser sind nicht nach dem Floatglasverfahren zu verarbeiten.

In der US-PS 28 60 059 ist UV-absorbierendes Glas beschrieben, das mit einem Ceroxidgehalt von 0,05 bis 0,5 Gew.% CeO₂ und 0,2 bis 0,6 Gew.% Fe₂O₃ arbeitet. Dieses Glas ist aufgrund des hohen Cergehalts teuer in der Herstellung. Der hohe Eisengehalt führt zu ungünstigen Transmissionswerten.

Demnach sind zwar unterschiedlichste UV-absorbierende Gläser bekannt geworden, jedoch noch keine UV-absorbierenden Gläser mit hoher Transmission im sichtbaren Bereich, die sich für die Herstellung von Floatglas, das in großen Mengen wirtschaftlich herstellbar sein muß, eignen.

In diesem Zusammenhang soll kurz auf das bevorzugte Flachglasherstellungsverfahren des Standes der Technik, das Floatglasverfahren, eingegangen werden:

Beim sogenannten Floatglasverfahren wird das flüssige Glas einem Floatbad aus geschmolzenem Zinn zugeleitet, auf dem es schwimmt (englisch: to float = schwimmen). Zum Schutz gegen Oxidation des Zinns wird das Verfahren in einer reduzierenden Schutzgasatmosphäre durchgeführt. Wegen dieser reduzierenden Atmosphäre ist die Verwendung verschiedener Zusätze, die in herkömmlichem Flachglas eingesetzt werden können, das nicht nach dem Floatglasverfahren hergestellt wird, nicht möglich. So verbietet sich beispielsweise die Verwendung von Blei- , Nickel-, Kupferoxiden o.ä. als Zusatz, da diese an der Oberfläche des Glasbandes zum Metall reduziert werden. Der Einsatz von Aluminiumoxid zur Gewährleistung der hydrolytischen Beständigkeit des Glases und auch zur Steuerung der Viskosität der Glasschmelze und die Verwendung von Natriumoxid zur Verflüssigung der Schmelze ist ebenfalls wichtig, so daß nur sehr genau eingestellte Gläser verwendet werden können. Das Zinnbad weist ein Temperaturgefälle von 600 bis 1100°C auf, wobei am Ende desselben bei 600°C das schwimmende Glasband abgehoben und langsam abgekühlt wird.

Es ist Aufgabe der Erfindung, ein einfach und wirtschaftlich herstellbares Flachglas, insbesondere ein nach dem Floatverfahren hergestelltes Glas mit erhöhter UV-Absorption ohne Verminderung der Farbneutralität oder wesentliche Verminderung der Gesamtlichtdurchlässigkeit (gem DIN 1249, Teil 10) zu schaffen.

Die Aufgabe wird erfindungsgemäß durch ein vanadinhaltiges Kalknatronglas mit erhöhter UV-Absorption für Wellenlängen unter 350 nm, gelöst, das zwischen 70 bis 74 Gew.% SiO₂, 0,00 bis 2,00 Gew.% Al₂O₃, weniger als 0,1 Gew.% Fe₂O₃, 0,00 bis 0,15 Gew.% TiO₂, 7,5 bis 10,0 Gew.% CaO, 3,5 bis 5,4 Gew.% MgO, 12,0 bis 15,0 Gew.% Na₂O, 0,0 bis 1 Gew.% K₂O, 0 bis 0,02 Gew.% BaO, 0,1 bin 0,3 Gew.% SO₃, 3 bis 7 Gew.ppm CoO und 0,10 bis 0,3 Gew.% V₂O₅ aufweist, wobei die Summe aller Gewichtsprozentsätze stets 100 sein soll.

Vorzugsweise ist das Glas nach dem Floatverfahren verarbeitbar.

Bei einer bevorzugten Ausführungsform besitzt es 71 bis 73 Gew.% SiO₂, 0,55 bis 0,75 Gew.% Al₂O₃, weniger als 0,07 Gew.% Fe₂O₃, 0,00 bis 0,12 Gew.% TiO₂, 8,0 bis 9,0 Gew.% CaO, 4,0 bis 4,5 Gew.% MgO, 12,5 bis 14 Gew.% Na₂O, 0,2 bis 0,4 Gew.% K₂O, 0,00 bis 0,02 Gew.% BaO, 0,15 bis 0,25 Gew.% SO₃, 4 bis 6 Gew.ppm CoO und 0,18 bis 0,22 Gew.% V₂O₅ , wobei die Summe der Gewichtsprozentsätze stets 100 sein soll.

Ein bevorzugtes Glas besitzt 72,5 bis 72,7 Gew.% SiO₂, 0,55 bis 0,75 Gew.% Al₂O₃, weniger als 0,06 Gew.% Fe₂O₃, 0 bis 0,12 Gew.% TiO₂, 8,4 bis 8,8 Gew.% CaO, 4,0 bis 4,44 Gew.% MgO, 12,9 bis 13,2 Gew.% Na₂O, 0,2 bis 0,4 Gew.% K₂O, 0 bis 0,01 Gew.% BaO, 0,17 bis 0,22 Gew.% SO₃, 5 Gew.ppm CoO und 0,19 bis 0,21 Gew.% V₂O₅, wobei die Summe der Gewichtsprozentsätze stets 100 sein soll.

Eine bevorzugte Verwendung des Glases ist für Ein- oder Mehrschichtverglasungen, solchen mit UV-empfindlichen Schichten aus organischen und/oder anorganischen Polymeren, oder mit UV-empfindlichen Klebemassen. Durch das erfindungsgemäße Glas ist es auch möglich, preiswerte nicht-UV-beständige Schichten, Folien und/oder Klebstoffe in Glasprodukten einzusetzen, da durch die Verwendung des UV-hemmenden Glases gemäß der Erfindung der Einfluß der UV-Strahlung auf diese UV-empfindlichen Bestandteile ausgeschlossen werden kann.

Ein typischer Anwendungsfall ist die Verwendung für Brandschutzscheiben. Ein weiterer Anwendungsfall ist die Verwendung für Ein- und Mehrschichtverglasungen von Kraftfahrzeugen.

Erfindungsgemäß kann nun ein UV-absorbierendes Floatglas geschaffen werden, bei dem in überraschender Weise auf die Verwendung toxischer und umweltbelastender färbender Bestandteile, wie Selen, verzichtet werden kann, wodurch die Ausbildung von aufwendigen Emissionsschutzmaßnahmen vermieden werden kann. Erfindungsgemäß werden erstmals nur zwei Komponenten, nämlich V₂O₅ und CoO zur Einstellung neutraler Farbeigenschaften eingesetzt, wodurch die Führung des Herstellungsverfahrens erheblich vereinfacht wird. Es könnte zwar auch mittels Ceroxid eine UV-Absorption erreicht werden, dies ist aber insofern nachteilig, als man etwa die fünffache Menge an Cer zur Erzielung der gleichen Absorptionswirkung benötigt, als an Vanadinoxid - wobei die Vanadinoxidverwendung unter anderem den Vorteil von höherer Wirtschaftlichkeit hat.

Der Eisengehalt des Glases ist sorgfältig abzustimmen, da ein zu hoher Eisengehalt in Verbindung mit V₂O₅ zu einer gelben Einfärbung führt. Andererseits ist seit langem bekannt, daß ein zu geringer Eisengehalt zu einer zu niedrigen IR-Absorption und damit zu einem unerwünschten Temperaturgradienten in der Schmelze führt, verbunden mit deutlich höheren Bodentemperaturen der Wanne. Dadurch tritt eine Qualitätsverschlechterung der Glasschmelze aufgrund zu hoher Bodentemperaturen in der Wanne auf. Diese gegenläufigen Wirkungen erfordern eine optimale Einstellung des Eisengehalts, der aufgrund der Färbung weniger als 0,06 Gew.% sein sollte, aus Gründen der IR-Absorption aber oberhalb des Gehaltes liegen sollte, der dem Gehalt des sogenannten Weißglases (= 0,02 Gew.% Fe₂O₃) entspricht. Dadurch, daß das erfindungsgemäße Glas eine Absorption über den gesamten IR-Bereich aufweist, kann ein besseres Floatglas erzielt werden. Der vorschlagsgemäße Eisengehalt hat ferner auch noch den Effekt, daß die Materialkosten für die Glasmischung günstiger sind als für im wesentlichen eisenfreie Gläser, da eisenfreie Sande teurer sind als Sande mit geringfügigem Eisengehalt.

Somit ist das Vorliegen einer geringen Menge Eisen im Glas durchaus erwünscht und verbessert die Verarbeitbarkeit.

Nachfolgend soll die Erfindung anhand von Ausführungs-bei spielen sowie der begleitenden Zeichnung näher erläutert werden. Dabei zeigt die einzige Figur Transmissionsspektren verschiedener bekannter Flachgläser im Vergleich mit erfindungsgemäßem UV-hemmendem Glas.

### Beispiel 1:

### Farbneutrales, UV-Strahlung absorbierendes Floatglas

Es wurde ein Glas aus 72,55 Gew.% SiO₂, 0,63 Gew.% Al₂O₃, 0,03 Gew.% Fe₂O₃, 0,11 Gew.% TiO₂, 8,67 Gew.% CaO, 4,32 Gew.% MgO, 12,99 Gew.% Na₂O, 0,3 Gew.% K₂O, 0,19 Gew.% SO₃, 0,01 Gew.% BaO, 0,2 Gew.% V₂O₅ und 5 Gew.ppm CoO hergestellt und im Floatglasverfahren zu Glas mit 4 mm Stärke verarbeitet.

Das derart hergestellte Floatglas besaß einen UVB-Transmissionswert von 0,00 %, einen UVA-Transmissionswert von 10 %, einen UV-Gesamttransmissionswert von 9 % und einen TL (Auge*D65)-Wert von 88 %, TE (CIE) betrug 83 % und TE (MOON 2) war 86 %. (gemessen gemäß DIN 67505 für den UV-Lichtstrahlungstransmissionsgrad)
Die Farbkoordinaten im 2°-Gesichtsfeld, D65, gemessen nach DIN 6174 und DIN 5033, betrugen:

| | |
|---|---|
| X | 83,0 |
| Y | 88,5 |
| Z | 94,8 |
| L* | 95,3 |
| A* | -2,0 |
| B* | 1,0 |

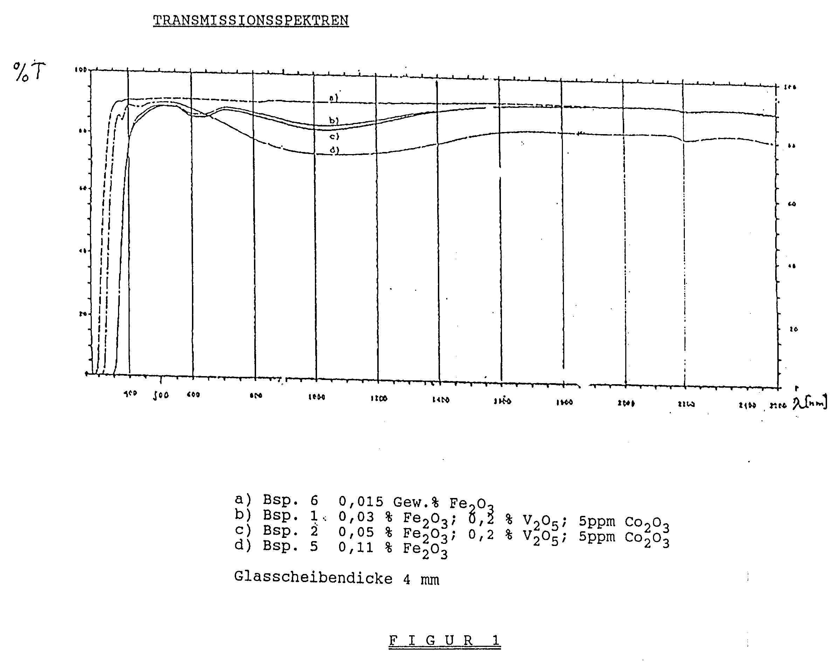

Das Transmissionsspektrum dieses Floatglases ist in Kurve B der Fig. 1 dargestellt, und es ist ersichtlich, daß eine scharfe Absorptionskante im Bereich von 350 nm sowie eine leicht erhöhte IR-Absorption im Bereich von 1050 nm auftritt.

### Beispiel 2:

### Farbneutrales, UV-Strahlung absorbierendes Floatglas

Es wurde ein Glas aus 72,53 Gew.% SiO₂, 0,63 Gew.% Al₂O₃, 0,05 Gew.% Fe₂O₃, 0,11 Gew.% TiO₂, 8,67 Gew.% CaO, 4,32 Gew.% MgO, 12,99 Gew.% Na₂O, 0,3 Gew.% K₂O, 0,19 Gew.% SO₃, 0,01 Gew.% BaO, 0,2 Gew.% V₂O₅ und 5 Gew.ppm CoO hergestellt und im Floatglasverfahren zu Glas mit einer Stärke von 4 mm verarbeitet.

Das derart hergestellte Floatglas besaß einen UVB-Transmissionswert von 0,00 %, einen UVA-Transmissionswert von 10 %, einen UV-Gesamttransmissionswert von 9 % und einen TL (Auge*D65)-Wert von 87 %, TE (CIE) betrug 83 % und TE (MOON 2) war 85 %.

Das Transmissionsspektrum dieses Floatglases ist in Kurve C der Fig. 1 dargestellt, und es ist ersichtlich, daß eine scharfe Absorptionskante im Bereich von 350 nm sowie eine leicht erhöhte IR-Absorption im Bereich von 1050 nm auftritt.

Die Farbkoordinaten im 2°-Gesichtsfeld, D65, betrugen:

| | |
|---|---|
| X | 82,3 |
| Y | 87,9 |
| Z | 93,6 |
| L* | 95,0 |
| A* | -2,4 |
| B* | 1,4 |

### Beispiel 3:

### Farbneutrales, UV-Strahlung absorbierendes Floatglas

Es wurde ein Glas aus 72,7 Gew.% SiO₂, 0,73 Gew.% Al₂O₃, 0,05 Gew.% Fe₂O₃, 0,04 Gew.% TiO₂, 8,4 Gew.% CaO, 4,00 Gew.% MgO, 12,9 Gew.% Na₂O, 0,4 Gew.% K₂O, 0,22 Gew.% SO₃, 0,2 Gew.% V₂O₅ und 5 Gew.ppm CoO hergestellt und im Floatglasverfahren zu Glas mit einer Stärke von 4 mm verarbeitet.

Das derart hergestellte Floatglas besaß einen UVB-Transmissionswert von 0,00 %, einen UVA-Transmissionswert von 8,12 %, einen UV-Gesamttransmissionswert von 7,74 % und einen TL (Auge*D65)-Wert von 87,2 %, TE (CIE) betrug 81,47 % und TE (MOON 2) war 83,71 %.

Die Farbkoordinaten im 2°-Gesichtsfeld, D65, betrugen:

| | |
|---|---|
| X | 81,335 |
| Y | 87,195 |
| Z | 91,933 |
| L* | 94,821 |
| A* | -2,986 |
| B* | 2,050 |

### Beispiel 4:

### Vergleichsversuch mit Vanadinpentoxidhaltigem Floatglas, gefärbt

Es wurde ein Glas aus 72,53 Gew.% SiO₂, 0,63 Gew.% Al₂O₃, 0,05 Gew.% Fe₂O₃, 0,11 Gew.% TiO₂, 8,67 Gew.% CaO, 4,32 Gew.% MgO, 12,99 Gew.% Na₂O, 0,3 Gew.% K₂O, 0,19 Gew.% SO₃, 0,01 Gew.% BaO, 0,2 Gew.% V₂O₅ ohne CoO hergestellt und im Floatverfahren zu Glas mit 4 mm Stärke verarbeitet.

Das derart hergestellte Floatglas besaß einen UVB-Transmissionswert von 0,00 %, einen UVA-Transmissionswert von 10 %, einen UV-Gesamttransmissionswert von 9 % und einen TL (Auge*D65)-Wert von 89 %, TE (CIE) betrug 84 % und TE (MOON 2) war 86 %.

Die Farbkoordinaten im 2°-Gesichtsfeld, D65, betrugen:

| | |
|---|---|
| X | 83,7 |
| Y | 89,4 |
| Z | 94,2 |
| L* | 95,7 |
| A* | -2,3 |
| B* | 2,1 |

Es zeigt sich, daß ein leicht gefärbtes Glas erhalten wird.

### Beispiel 5

### Vergleichsversuch mit Floatglas:

Es wurde ein Glas aus 72,70 Gew.% SiO₂, 0,60 Gew.% Al₂O₃, 0,11 Gew.% Fe₂O₃, 0,10 Gew.% TiO₂, 8,79 Gew.% CaO, 4,19 Gew.% MgO, 13,0 Gew.% Na₂O, 0,3 Gew.% K₂O, 0,2 Gew.% SO₃, 0,01 Gew.% BaO hergestellt und nach dem Floatglasverfahren zu einer Schichtdicke von 4 mm verarbeitet.

Das derart hergestellte Floatglas besaß einen UVB-Transmissionswert von 0,1 %, einen UVA-Transmissionswert von 60 %, einen UV-Gesamttransmissionswert von 58 % und einen TL (Auge*D65)-Wert von 89 %, TE (CIE) betrug 82 % und TE (MOON 2) war 83 %.

Die Farbkoordinaten im 2°-Gesichtsfeld, D65, betrugen:

| | |
|---|---|
| X | 84,3 |
| Y | 89,6 |
| Z | 97,3 |
| L* | 95,8 |
| A* | -1,5 |
| B* | 0,2 |

Das Transmissionsspektrum dieses Floatglases ist in Kurve d der Fig. 1 dargestellt, und es ist ersichtlich, daß keine Absorptionskante im Bereich von 350 nm, aber aufgrund des relativ hohen Eisengehalts eine erhöhte IR-Absorption im Bereich von 1050 nm auftritt.

### Beispiel 6

### Vergleichsversuch mit weißem Floatglas:

Es wurde ein Glas aus 72,30 Gew.% SiO₂, 0,60 Gew.% Al₂O₃, 0,015 Gew.% Fe₂O₃, 0,40 Gew.% TiO₂, 8,80 Gew.% CaO, 4,17 Gew.% MgO, 13,10 Gew.% Na₂O, 0,40 Gew.% K₂O, 0,2 Gew.% SO₃, 0,01 Gew.% BaO hergestellt und nach dem Floatverfahren zur einer Schichtstärke der Glasscheibe von 4 mm verarbeitet.

Das derart hergestellte Floatglas besaß einen UVB-Transmissionswert von 25 %, einen UVA-Transmissionswert von 82 %, einen UV-Gesamttransmissionswert von 79 % und einen TL (Auge*D65)-Wert von 91 %, TE (CIE) betrug 91 % und TE (MOON 2) war 91 %.

Die Farbkoordinaten im 2°-Gesichtsfeld, D65, betrugen:

| | |
|---|---|
| X | 86,9 |
| Y | 91,6 |
| Z | 99,2 |
| L* | 96,6 |
| A* | -0,2 |
| B* | 0,3 |

Das Transmissionsspektrum dieses Floatglases ist in Kurve a der Fig. 1 dargestellt, und es ist ersichtlich, daß keine Absorptionskante im Bereich von 350 nm sowie aufgrund des geringen Eisengehalts praktisch keine erhöhte IR-Absorption im Bereich von 1050 nm auftritt.

Aus obigem ist ersichtlich, daß die erfindungsgemäßen UV-Absorptionsgläser der Beispiele 1 bis 3 erheblich verbessertes Absorptionsverhalten im UV-Bereich gegenüber den Vergleichversuchsgläsern zeigen, im sichtbaren Bereich jedoch praktisch farbneutral wirken.

### Beispiel 7

### Brandschutzglas

Es wurde in an sich bekannter Weise ein Mehrscheibenverbundglas mit dem Aufbau: 2 Außenscheiben mit einer Stärke von 4 mm und Natriumsilikat als feuerhemmender Schicht hergestellt. Dabei wird als mindestens eine Außenglasscheibe Glas des Beispiels 1 verwendet. Der so hergestellte Glasverbund mit einer Fläche von 30 cm x 30 cm wurde sodann der Bestrahlung an einer Strahlungswand mit 43 UV-Lampen mit je 300 W und einer erhöhten Emission im Bereich von unter 350 nm, bei einem Abstand der Lampen vom Glas von 1 m ausgesetzt. Es wurde auch eine Verbundglasscheibe mit herkömmlichem FLoatglas gemäß Ver-gleichsbeispiel 6 ohne erhöhte UV-Absorption hergestellt und der gleichen Bestrahlung ausgesetzt. Nach einer Bestrahlung über 100 Stunden zeigte sich bei der Verbundglasscheibe mit dem herkömmlichen Glas eine Zersetzung der Wasserglasschicht, während die erfindungsgemäße Verbundglasscheibe klar blieb.

### Beispiel 8

### Verbundglas

Es wurde ein Verbundglas in an sich bekannter Weise als Mehrscheibenverbundglas mit dem Aufbau: 2 Außenscheiben mit einer Stärke von 4 mm mit aromatischem Polymer als Kleber hergestellt. Dabei wurde als mindestens eine Außenglasscheibe Glas des Beispiels 1 verwendet. Der so hergestellte Glasverbund wurde sodann der Bestrahlung an der Bestrahlungswand mit 43 UV-Lampen mit 300 W und einer erhöhten Emission im Bereich von unter 350 nm in einem Abstand von 0,5 m vom Glas angeordnet, ausgesetzt. Es wurde auch eine Verbundglasscheibe mit herkömmlichem Floatglas gemäß Vergleichsbeispiel 6 ohne erhöhte UV-Absorption hergestellt und der gleichen Bestrahlung ausgesetzt. Nach einer Bestrahlung über 100 Stunden zeigte sich bei der Verbundglasscheibe mit dem herkömmlichen Glas eine Zersetzung der Polymerschicht, während die erfindungsgemäße verbundglasscheibe klar blieb. Somit konnte in überraschender Weise erstmals auch Kleber der aromatischen Polymergruppe, die besonders günstige Eigenschaften hinsichtlich thermischer Beständigkeit aufweist, in Verbundglasanordnungen eingesetzt werden.

## Patentansprüche

1. Vanadinhaltiges Kalknatronglas mit erhöhter UV-Absorption für Wellenlängen unter 350 nm und hoher Transmission im Sichtbaren mit 70 bis 74 Gew.% SiO₂, 0,00 bis 2,0 Gew.% Al₂O₃, weniger als 0,1 Gew.% Fe₂O₃, 0,00 bis 0,15 Gew.% TiO₂, 7,5 bis 10,0 Gew.% CaO, 3,5 bis 5,4 Gew.% MgO, 12,0 bis 15,0 Gew.% Na₂O, 0,0 bis 1,0 Gew.% K₂O, 0 bis 0,02 Gew.% BaO, 0,1 bis 0,3 Gew.% SO₃, 3 bis 7 Gew.ppm CoO und 0,10 bis 0,3 Gew.% V₂O₅ , wobei die Summe aller Gewichtsprozentsätze stets 100 sein soll.

2. Glas nach Anspruch 1, dadurch gekennzeichnet, daß es nach dem Floatverfahren verarbeitbar ist.

3. Glas nach Anspruch 1, dadurch gekennzeichnet, daß es 71 bis 73 Gew.% SiO₂, 0,55 bis 0,75 Gew.% Al₂O₃, weniger als 0,07 Gew.% Fe₂O₃, 0,00 bis 0,12 Gew.% TiO₂, 8,0 bis 9,0 Gew.% CaO, 4,0 bis 4,5 Gew.% MgO, 12,5 bis 14 Gew.% Na₂O, 0,2 bis 0,4 Gew.% K₂O, 0,00 bis 0,02 Gew.% BaO, 0,15 bis 0,25 Gew.% SO₃, 4 bis 6 Gew.ppm CoO und 0,18 bis 0,22 Gew.% V₂O₅ , wobei die Summe der Gewichtsprozentsätze stets 100 sein soll, aufweist.

4. Glas nach Anspruch 1, 2 oder 3, dadurch gekennzeichnet, daß es 72,5 bis 72,7 Gew.% SiO₂, 0,55 bis 0,75 Gew.% Al₂O₃, weniger als 0,06 Gew.% Fe₂O₃, 0 bis 0,12 Gew.% TiO₂, 8,4 bis 8,8 Gew.% CaO, 4,0 bis 4,44 Gew.% MgO, 12,9 bis 13,2 Gew.% Na₂O, 0,2 bis 0,4 Gew.% K₂O, 0 bis 0,01 Gew.% BaO, 0,17 bis 0,22 Gew.% SO₃, 5 Gew.ppm CoO und 0,19 bis 0,21 Gew.% V₂O₅ aufweist, wobei die Summe der Gewichtsprozentsätze stets 100 sein soll.

5. Verwendung des Glases nach irgendeinem der vorangehenden Ansprüche für Ein- und Mehrschichtverglasungen, solchen mit UV-empfindlichen Schichten aus organischen und/oder anorganischen Polymeren, oder mit UV-empfindlichen Klebemassen.

6. Verwendung nach Anspruch 5 für Brandschutzscheiben.

7. Verwendung nach Anspruchs 5 für Kraftfahrzeugverglasungen.

## Claims

1. Soda-lime glass containing vanadium with an increased UV absorption for wavelengths of less than 350 nm and with a high transmission in sight, having 70 to 74 % by wt. SiO₂, 0.00 to 2.0 % by wt. Al₂O₃, less than 0.1 % by wt. Fe₂O₃, 0.00 to 0.15 % by wt. TiO₂, 7.5 to 10.0 % by wt. CaO, 3.5 to 5.4 % by wt. MgO, 12.0 to 15.0 % by wt. Na₂O, 0.0 to 1.0 % by wt. K₂O, 0 to 0.02 % by wt. BaO, 0.1 to 0.3 % by wt. SO₃, 3 to 7 ppm by wt. CoO and 0.10 to 0.3 % by wt. V₂O₅, the sum of all the percentages by weight always having to be 100.

2. Glass according to claim 1, characterised in that it is processed by the float process.

3. Glass according to claim 1, characterised in that it comprises 71 to 73 % by wt. SiO₂, 0.55 to 0.75 % by wt. Al₂O₃, less than 0.07 % by wt. Fe₂O₃, 0.00 to 0.12 % by wt. TiO₂, 8.0 to 9.0 % by wt. CaO, 4.0 to 4.5 % by wt. MgO, 12.5 to 14 % by wt. Na₂O, 0.2 to 0.4 % by wt. K₂O, 0.00 to 0.02 % by wt. BaO, 0.15 to 0.25 % by wt. SO₃, 4 to 6 ppm by wt. CoO and 0.18 to 0.22 % by wt. V₂O₅, the sum of the percentages by weight always having to be 100.

4. Glass according to claim 1, 2 or 3, characterised in that it comprises 72.5 to 72.7 % by wt. SiO₂, 0.55 to 0.75 % by wt. Al₂O₃, less than 0.06 % by wt. Fe₂O₃, 0 to 0.12 % by wt. TiO₂, 8.4 to 8.8 % by wt. CaO, 4.0 to 4.44 % by wt. MgO, 12.9 to 13.2 % by wt. Na₂O, 0.2 to 0.4 % by wt. K₂O, 0 to 0.01 % by wt. BaO, 0.17 to 0.22 % by wt. SO₃, 5 ppm by wt. CoO and 0.19 to 0.21 % by wt. V₂O₅, the sum of the percentages by weight always having to be 100.

5. Use of the glass according to any of the preceding claims for single- and multiple-layer glazing, having UV-sensitive layers formed from organic and/or inorganic polymers, or having UV-sensitive adhering substances.

6. Use according to claim 5 for fire-resistant panes.

7. Use according to claim 5 for motor vehicle glazing.

## Revendications

1. Verre à la soude et à la chaux contenant du vanadium, témoignant d'un pouvoir supérieur d' absorption des UV aux longueurs d'onde inférieures à 350 nm et d'un pouvoir de transmission élevé aux longueurs d'onde visibles, comportant 70 à 74 % en poids de SiO₂, 0,00 à 2,0 % en poids de Al₂O₃, moins de 0,1 % en poids de Fe₂O₃, 0,00 à 0,15 % en poids de TiO₂, 7,5 à 10,0 % en poids de CaO, 3,5 à 5,4 % en poids de MgO, 12,0 à 15,0 % en poids de Na₂O, 0,0 à 1,0 % en poids de K₂O, 0 à 0,02 % en poids de BaO, 0,1 à 0,3 % en poids de SO₃, 3 à 7 ppm en poids de CoO et 0,10 à 0,3 % en poids de V₂O₅, la somme de tous les pourcentages en poids étant toujours de 100.

2. Verre selon la revendication 1, caractérisé en ce qu'il peut être traité selon le procédé de flottage.

3. Verre selon la revendication 1, caractérisé en ce qu'il comporte 71 à 73 % en poids de SiO₂, 0,55 à 0,75 % en poids de Al₂O₃, moins de 0,07 % en poids de Fe₂O₃, 0,00 à 0,12 % en poids de TiO₂, 8,9 à 9,0 % en poids de CaO, 4,0 à 4,5 % en poids de MgO, 12,5 à 14 % en poids de Na₂O, 0,2 à 0,4 en poids de K₂O, 0,00 à 0,02 % en poids de BaO, 0,15 à 0,25 % en poids de SO₃, 4 à 6 ppm en poids de CoO et 0,18 à 0,22 % en poids de V₂O₅, la somme de tous les pourcentages en poids étant toujours de 100.

4. Verre selon la revendication 1, 2 ou 3, caractérisé en ce qu'il comporte 72,5 à 72,7 % en poids de SiO₂, 0,55 à 0,75 % en poids de Al₂O₃, moins de 0,06 % en poids de Fe₂O₃, 0,00 à 0,12 % en poids de TiO₂, 8,4 à 8,8 % en poids de CaO, 4,0 à 4,44 % en poids de MgO, 12,9 à 13,2 % en poids de Na₂O, 0,2 à 0,4 en poids de K₂O, 0,00 à 0,01 % en poids de BaO, 0,17 à 0,22 % en poids de SO₃, 5 ppm en poids de CoO et 0,18 à 0,22 % en poids de V₂O₅, la somme de tous les pourcentages en poids étant toujours de 100.

5. Utilisation du verre selon l'une quelconque des revendications précédentes pour des vitrages à une et plusieurs couches, notamment avec des couches sensibles aux UV constituées de polymères organiques et/ou minéraux, ou avec des masses collantes sensibles aux UV.

6. Utilisation selon la revendication 5 pour des vitres de protection contre l'incendie.

7. Utilisation selon la revendication 5 pour des vitrages de véhicules à moteur.
